# EUROPEAN PATENT APPLICATION

(11) **EP 4 422 225 A1**
(43) Date of publication of application: **28.08.2024**
(21) Application number: 23158484.8
(22) Date of filing: 24.02.2023
(51) Int. Cl.: H04W 4/50, H04W 8/20, H04W 12/033, H04W 12/30, H04W 12/45, H04W 12/42, H04L 67/06, H04L 69/04

(54) **SYSTEM AND METHOD OF MANAGING SIM CARD PROFILES FOR DIFFERENT EMBEDDED UNIVERSAL INTEGRATED CIRCUIT CARDS**

(71) Applicant: STMicroelectronics International N.V., 1228 Plan-les-Ouates, Geneva (CH)
(72) Inventor: VENEROSO, Amedeo, CASERTA 81100 (IT); ACUNTO, Salatore, GENEVE 1208 (CH); TOSCANO, Ettore, NAPOLI 80131 (IT)
(74) Representative: Casalonga

(57) **Abstract**

According to one aspect, it is proposed a system comprising:
- embedded universal integrated circuit cards,
- afirst least one server (PM, SM-DP) configured to produce:
• SIM card profiles, and
• a batch of said SIM card profiles, the batch including at least one dynamic part of each SIM card profile and only one occurrence of said at least one static part,

- another server (DM) configured to produce a SIM card profile package for each SIM card profile of said batch and to download the SIM card profile packages onto the embedded universal integrated circuit cards.

## Description

Implementations and embodiments of the invention relate to embedded universal integrated circuit card.

Universal integrated circuit cards (UICC) are smart cards (integrated circuit card) used in mobile terminals in GSM (Global System for Mobile Communications) and UMTS (Universal Mobile Telecommunications System) networks. A universal integrated circuit card can be referred to as a SIM card ("SIM" being the acronym of Subscriber Identity Module).

An embedded universal integrated circuit card (also known as "eUICC") is an evolution of the classical universal integrated circuit card. The embedded universal integrated circuit card is a form of programmable SIM card that is embedded directly into a device. In particular, the embedded universal integrated circuit card is an electronic chip permanently attached to a device. The embedded universal integrated circuit card can be embedded on various devices. For example, the embedded universal integrated circuit card can be embedded in a smartphone or in objects such as sensors, notably in the field of Internet of Things ("IoT").

An embedded universal integrated circuit card enables simplifying the management of subscriptions and connections with different cellular network service providers.

In particular, an embedded universal integrated circuit card ("eUICC") is used to securely store one or more SIM card profiles. For example, embedded universal integrated circuit cards are specified in GSMA specifications, notably SGP.01 and SGP.21.

A SIM card profile is a unique identifier and cryptographic key used by cellular network service providers to uniquely identify and securely connect to mobile network devices. More particularly, the SIM card profile is a combination of a file structure, data and applications which are stored in an embedded universal integrated circuit card. The SIM card profile is created by a profile maker according to a cellular network service provider from a specific purchase order. For example, a SIM card profile is a profile as defined in the "eUICC Profile Package: Interoperable Format Technical Specification" of the Trusted Connectivity Alliance.

A subscription to a cellular network service requires downloading a SIM card profile on the embedded universal integrated circuit card. It is important to provide a secure method for downloading the SIM card profile in the embedded universal integrated circuit card to protect the data included in the SIM card profile. Therefore, the SIM card profile is transmitted to the embedded universal integrated circuit card in a secured package.

When the embedded universal integrated circuit card is embedded in a IoT device, it can be difficult to download the SIM card profile when the device is deployed on the field. Indeed, it can be difficult to connect the embedded universal integrated circuit card to a telecom network without a first subscription.

Besides, it is also difficult to download the SIM card profile onto the embedded universal integrated circuit card at the factory that produces the embedded universal integrated circuit card. Indeed, such download implies for the factory of the embedded universal integrated circuit card to know in advance with which cellular network service provider the subscription will be taken out by the entity that will use the device that embeds the embedded universal integrated circuit card.

Therefore, it is sometimes more convenient to download the SIM card profile on the device when the device is manufactured. The device manufacturer can receive the SIM card profile from a server of a Subscription Manager for Data Preparation ("SM-DP", "SM-DP+" for consumers or another server of this kind for factory provisioning). This server is configured to receive the SIM card profile from the profile maker and to generate the secure package including the SIM card profile before delivering it to the device manufacturer.

The SIM card profile provided by the profile maker is securely associated with a given embedded universal integrated circuit card that uses the device manufacturer. The device manufacturer receives the associated profiles and downloads each profile to the intended embedded universal integrated circuit card. The device manufacturer cannot access and manipulate the SIM card profile before delivering it to the embedded universal integrated circuit card, as data of the SIM card profile are encrypted and can only be decrypted by the embedded universal integrated circuit card.

The device manufacturer can require a great number of SIM card profiles for the devices that he produces. Therefore, the SIM card profiles are generally delivered to the device manufacturer in a batch generated by the profile maker.

Data transmission rates and reliability reduces the amount of SIM card profiles that can be sent in a same batch. Moreover, the SM-DP server can receive a great number of profile requests. If the device manufacturer does not receive all the SIM card profiles that he requires, then the device manufacturer may have to stop its production of devices.

Therefore, there is a need to provide solution for downloading SIM card profiles in embedded universal integrated circuit cards that allows reducing data transferred between a profile maker server and the embedded universal integrated circuit cards.

According to one aspect, it is proposed a system comprising:
- embedded universal integrated circuit cards,
- at least one server configured to produce:
   - SIM card profiles according to a given configuration -notably defined by a cellular network service provider-, each SIM card profile comprising at least one static part that is common to said SIM card profiles and at least one dynamic part that is different between the SIM card profiles, and
   - a batch of said SIM card profiles, the batch including said at least one dynamic part of each SIM card profile and only one occurrence of said at least one common static part, said at least one static part being encrypted by using a common cryptographic key, and said at least one dynamic part of each SIM card profile being encrypted by using a cryptographic key associated with this SIM card profile,
- another server configured to:
   - receive said batch and produce a SIM card profile package for each SIM card profile of said batch, each SIM card profile package including:
      o said at least one static part of this SIM card profile encrypted by using the common cryptographic key,
      o said common cryptographic key and said at least one dynamic part of this SIM card profile, this common cryptographic key and this at least one dynamic part being encrypted by using its associated cryptographic key,
   - download the SIM card profile packages onto the embedded universal integrated circuit cards, each embedded universal integrated circuit card being configured to decrypt said at least one static part by using the common cryptographic key and to decrypt said at least one dynamic part by using its associated cryptographic key to obtain the SIM card profile.

Said at least one server configured to produce a batch of SIM card profiles can comprise two servers, notably a server of a profile maker and a server of a Subscription Manager for Data Preparation ("SM-DP"). In this case the server of the profile maker is configured to produce the SIM card profiles and said batch of SIM card profiles, and to deliver this batch of SIM card profiles to the server of the Subscription Manager for Data Preparation through a secure channel between these two servers. The server of the Subscription Manager for Data Preparation is then configured to deliver said batch of SIM card profiles to the server configured to produce the SIM card profile packages that are downloaded onto the embedded universal integrated circuit card through a secure channel between these two servers.

As an alternative, only one server configured to produce a batch of SIM card profiles can be used. Then, such server is configured to produce the SIM card profiles and said batch of SIM card profiles, and to deliver this batch directly to the server configured to produce the SIM card profile packages that are downloaded onto the embedded universal integrated circuit card through a secure channel between these two servers.

The server configured to produce the SIM card profile packages that are downloaded onto the embedded universal integrated circuit card can be a server of a device manufacturer. Each embedded universal integrated circuit card can be embedded in a device produced by said device manufacturer.

Having in a batch of SIM card profiles only one occurrence of said at least one static part, instead of a repetition of said at least one static part for each SIM card profile, allows reducing data that are transferred from said at least one server that produces the SIM card profile to the server that is used to download the SIM card profile packages onto the embedded universal integrated circuit card.

Using a common cryptographic key allows protecting said at least one static part with another key than the associated cryptographic key used to encrypt said at least one dynamic part. This allows the server that download the SIM card profile packages onto the embedded universal integrated circuit cards to manipulate said at least one encrypted static part and said at least one encrypted dynamic part of the SIM card profiles to produce said SIM card profile packages. This server cannot alter or decrypt the SIM card profiles when manipulating them, as they are manipulated in an encrypted domain.

According to a particularly advantageous embodiment, said batch includes for each SIM card profile:
- said common cryptographic key encrypted with said associated key associated with this SIM card profile, and
- said associated cryptographic key associated with this SIM card profile.

Each SIM card profile package also includes said associated cryptographic key associated with the SIM card profile associated with this SIM card profile package.

Advantageously, each associated cryptographic key associated with a SIM card profile is encrypted with a cryptographic key known by said at least one server and by the embedded universal integrated circuit card configured to download the SIM card profile package associated with this SIM card profile.

Preferably, said cryptographic key known by said at least one server and by the embedded universal integrated circuit card is computed by using a Diffie-Hellman algorithm.

Advantageously, the common cryptographic key is a random value.

Preferably, said associated cryptographic key is a random value.

According to a particularly advantageous embodiment, said batch also comprises an identifier associated with said at least one static part and an identifier associated with said at least one dynamic part for each SIM card profile, said another server being configured to assemble said at least one static part and said at least one dynamic part of a SIM card profile based on their identifiers to form said SIM card profile package.

Advantageously, each SIM card profile comprises a plurality of static parts and a plurality of dynamic parts.

Preferably, said at least one server is configured to group all the static parts of a SIM card profile in one part of the SIM card profile package. This allows simplifying the encryption and decryption of the static parts and of the dynamic parts. In particular, this allows avoiding to extend each static part and each dynamic part to the size of the input of the cryptographic algorithm (for example 16 bytes for AES), so as to limit the overhead required to perform this cryptographic algorithm.

According to a particularly advantageous embodiment, said batch also comprises at least one integrity check value. Said at least one integrity check value can be used afterwards to verify the integrity of said at least one static part, and to verify that said at least one static part is not mixed compared to an original intended order.

Preferably, said at least one integrity check value can be a hash value associated with said at least one static part. As a variant, said at least one integrity check value can be a unique identifier or a counter that is included in said at least one static part and in said at least one dynamic part.

According to another aspect it is proposed a method of downloading SIM card profiles onto different embedded universal integrated circuit cards, the method comprising:
- producing by at least one server SIM card profiles according to a given configuration -notably defined by a cellular network service provider-, each SIM card profile comprising at least one static part that is common to all SIM card profiles and at least one dynamic part that is different between the SIM card profiles, and
- producing by said at least one server a batch of said SIM card profiles, the batch including said at least one dynamic part of each SIM card profile and only one occurrence of said at least one common static part, said at least one static part being encrypted by using a common cryptographic key, and said at least one dynamic part of each SIM card profile being encrypted by using a cryptographic key associated with this SIM card profile ,
- receiving by another server said batch,
- producing by said another server a SIM card profile package for each SIM card profile of said batch, each SIM card profile package including:
   o said at least one static part of this SIM card profile encrypted by using the common cryptographic key,
   o said common cryptographic key and said at least one dynamic part of this SIM card profile, this common cryptographic key and this at least one dynamic part being encrypted by using its associated cryptographic key,
- downloading from said another server the SIM card profile packages onto the embedded universal integrated circuit cards,
- decrypting by each embedded universal integrated circuit card said at least one static part by using the common cryptographic key and said at least one dynamic part by using its associated cryptographic key to obtain the SIM card profile.

According to a particularly advantageous implementation, said batch includes for each SIM card profile:
- said common cryptographic key encrypted with said associated key associated with this SIM card profile, and
- said associated cryptographic key associated with this SIM card profile.

Each SIM card profile package also includes said associated cryptographic key associated with the SIM card profile associated with this SIM card profile package.

Advantageously, each associated cryptographic key associated with a SIM card profile is encrypted with a cryptographic key known by said at least one server and by the embedded universal integrated circuit card configured to download the SIM card profile package associated with this SIM card profile.

Preferably, said cryptographic key known by said at least one server and by the embedded universal integrated circuit card is computed by using a Diffie-Hellman algorithm.

Advantageously, the common cryptographic key is a random value.

Preferably, said associated cryptographic key is a random value.

According to a particularly advantageous embodiment, said batch also comprises an identifier associated with said at least one static part and an identifier associated with said at least one dynamic part for each SIM card profile. Said another server assembles said at least one static part and said at least one dynamic part of a SIM card profile based on their identifiers to form said SIM card profile package.

Advantageously, each SIM card profile comprises a plurality of static parts and a plurality of dynamic parts.

Preferably, producing said batch includes grouping all the static parts of a SIM card profile in one part of the SIM card profile package.

According to a particularly advantageous embodiment, said batch also comprises at least one integrity check value. Preferably, said at least one integrity check value is a hash value associated with said at least one static part.

Other advantages and features of the invention will appear in the detailed description of embodiments and implementations, in no way restrictive, and the attached drawings in which:
[Fig 1]
[Fig 2]
[Fig 3]
[Fig 4]
[Fig 5]

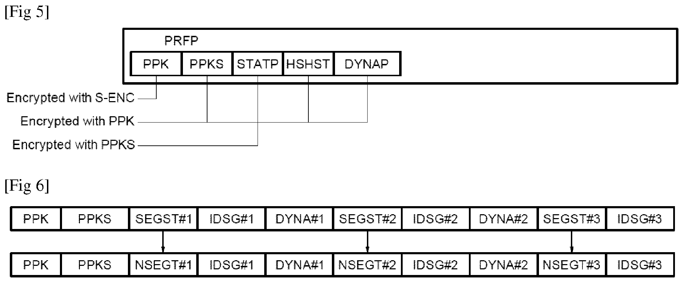

[Fig 6] schematically illustrate various implementations and embodiments of the invention.

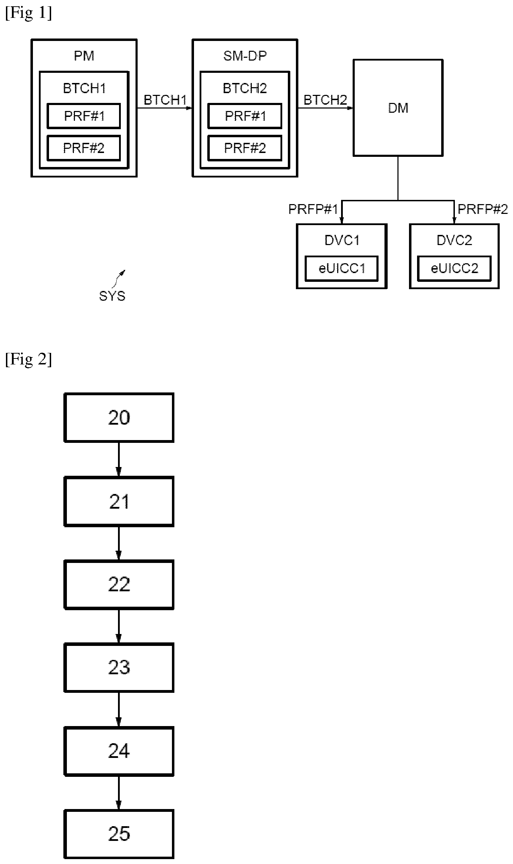

Figure 1 illustrates an embodiment of a system SYS for managing SIM card profiles.

The system SYS comprises a plurality of embedded universal integrated circuit cards, a server PM of a profile maker, a server DM of a device manufacturer and a server SM-DP of a Subscription Manager for Data Preparation.

An embedded universal integrated circuit card (eUICC) is an electronic chip that is used as a programmable SIM card.

The device manufacturer is an entity that manufactures devices. As an example, Figure 1 illustrates two devices DVC1 and DVC2 that are produced by the device manufacturer. The devices can be smartphones or objects, such as sensors, that are configured to be used in the Internet of Things. Each device includes an embedded universal integrated circuit card. In figure 1, the devices DVC1 and DVC2 includes the embedded universal integrated circuit cards eUICC1 and eUICC2 respectively.

The embedded universal integrated circuit card of each device is configured to be associated with a given SIM card profile. The SIM card profile allows the embedded universal integrated circuit card to be able to use a cellular network of a cellular network service provider.

The server PM of the profile maker is configured to generate the SIM card profiles based on subscriptions with a cellular network service provider.

The server PM of the profile maker is configured to deliver in a single batch BTCH1 the SIM card profiles that are intended for the device manufacturer DM. As an example, in figure 1, the batch BTCH1 comprises two SIM card profiles PRF#1 and PRF#2. Nevertheless, such batch can comprise more than two SIM card profiles. For example, the batch can comprise thousands of SIM card profiles.

Each SIM card profile of the batch BTCH1 comprises at least one static part and at least one dynamic part.

The static part of each SIM card profile of a batch BTCH1 is a part of data that that is common between the different SIM card profiles of the batch BTCH1. If the SIM card profiles of a same batch BTCH1 include a plurality of static parts, the batch BTCH1 includes an identifier for each static part of the SIM card profiles.

The dynamic part of each SIM card profile of a batch BTCH1 is a part of data that that is different between the different SIM card profiles of the batch BTCH1. If the SIM card profiles of a same batch includes a plurality of dynamic parts, the batch BTCH1 includes an identifier for each dynamic part of each SIM card profile. The identifier of a dynamic part can be the same than the one of the static parts that precedes this dynamic part in the SIM card profile.

Each identifier serves as an integrity check value. In particular, each identifier can be used afterwards to verify the integrity of said at least one static part, and to verify that said at least one static part is not mixed compared to an original intended order. The identifier can be a hash value for each static part.

The profile maker server PM is configured to encrypt each static part of each SIM card profile and its identifier by using a common cryptographic key PPKS. The cryptographic key PPKS can be computed with any means. For example, the cryptographic key PPKS can be a random value.

The profile maker server PM is configured to generate the batch BTCH1 so as to include only one occurrence of each static parts of the different SIM card profile. The batch BTCH1 also includes each dynamic part of each SIM card profile.

If each SIM card profile of a batch BTCH1 comprises a plurality of static parts, the static parts are arranged one after the other in the batch BTCH1.

If each SIM card profile of a batch BTCH1 comprises a plurality of dynamic parts, the dynamic parts are arranged one after the other in the batch BTCH1.

The dynamic parts can be arranged after the static parts in the batch BTCH1.

The profile maker server PM is configured to deliver the generated batch BTCH1 to the server SM-DP through a secure channel.

The server SM-DP is configured to receive the batch BTCH1 generated by the profile maker and to produce and send a batch BTCH2 of the SIM card profiles to the device manufacturer server DM through a secure channel.

In particular, the batch BTCH2 is equivalent to the batch BATCH1. The batch BTCH2 includes only one occurrence of each static parts of the different SIM card profile and each dynamic part of each SIM card profile. For each SIM card profile i, the server SM-DP is configured to encrypt each dynamic part of this SIM card profile i, its identifier and the cryptographic key PPKS by using an associated cryptographic key PPK(i). As a variant, it is also possible that the server PM of the profile maker proceeds with this encryption.

In particular, the cryptographic key PPK(i) can be a random value.

The batch BTCH2 also comprises each cryptographic key PPK(i) (or preferably a value, notably a public key, that can be used by the embedded universal integrated circuit card intended to receive the SIM card profile i to obtain the cryptographic key PPK(i)).

Each cryptographic key PPK(i) is encrypted with a cryptographic key, named session key S-ENC(i), only known by said server SM-DP and by the embedded universal integrated circuit card intended to receive the SIM card profile i. Each session key S-ENC(i) can be computed by using a Diffie-Hellman algorithm, notably according to the specification SGP.22 defined by the organization GSMA.

The server DM of the device manufacturer is configured to assemble the different parts of each SIM card profile.

In particular, the server DM of the device manufacturer is configured to assemble the different parts of each SIM card profile based on their associated identifier indicated in the batch BTCH2 delivered by the profile maker server so as to generate a package for each SIM card profile. Such package includes the SIM card profile that is associated with a given embedded universal integrated circuit card. In figure 1, two SIM card profile packages PRFP#1 and PRFP#2 are ill us trated.

In particular, the SIM card profile package includes the cryptographic key PPK(i) (or preferably a value that can be used by the embedded universal integrated circuit card intended to receive the SIM card profile i to obtain the cryptographic key PPK(i)), the cryptographic key PPKS, each static part of the SIM card profile and each dynamic part of the SIM card profile. More particularly, the static parts and the dynamic parts are arranged alternatively in the package after the cryptographic keys PPK and PPKS. As a variant, it is possible to group the static parts and the dynamic parts of the SIM card profile.

The package can also include said identifier for each static part, for example a hash value of the static part. This identifier can be use afterwards to verify the integrity of each static part when the embedded universal integrated circuit card loads the SIM card profile.

The cryptographic key PPKS, each dynamic part, and the eventual hash value are encrypted with the cryptographic key PPK. Encrypting the cryptographic key PPKS with the cryptographic key PPK allows protecting the cryptographic key PPKS. Besides, each static part is encrypted with the cryptographic key PPKS.

Each SIM card profile package generated by the server DM of the device manufacturer can be downloaded by the device manufacturer onto its associated embedded universal integrated circuit card integrated in a given device. As an example, in figure 1, the SIM card profile package PRFP#1 is downloaded onto the embedded universal integrated circuit card eUICC1 and the SIM card profile package PRFP#2 is downloaded onto the embedded universal integrated circuit card eUICC2.

The embedded universal integrated circuit card is configured to decrypt the cryptographic key PPKS with the cryptographic key PPK. The embedded universal integrated circuit card is also configured to decrypt each static part using the cryptographic key PPKS and each dynamic part using the cryptographic key PPK.

The embedded universal integrated circuit card can be configured to compute a hash value for each static part of a SIM card profile and compare it to its associated hash value indicated in the SIM card profile package. This allows the embedded universal integrated circuit card to verify the integrity of this static part and to verify that each static part is at the correct place in the SIM card profile.

The embedded universal integrated circuit card is also configured to assemble each decrypted static part with each dynamic static part to obtain the full SIM card profile.

Figure 2 illustrates a method of managing SIM card profiles to be downloaded into different embedded universal integrated circuit card. Such method can be implemented by the system described previously.

The method comprises a step 20 in which the profile maker server receives a request for producing SIM card profiles from a cellular network service provider. This request is carried out to allow embedded universal integrated circuit cards to use the cellular network of the cellular network service provider once these embedded universal integrated circuit cards are embedded in various devices produced by a device manufacturer.

The request is received by the profile maker server from a cellular network service provider server.

Then, the method comprises a step 21 in which the profile maker server produces a batch of SIM card profiles according to the received request. Each SIM card profile is produced according to a configuration defined by the cellular network service provider. In particular, the profile maker produces a batch that includes the different dynamic parts of the SIM card profiles but only one occurrence of the common static parts of the SIM card profiles, as indicated previously.

Then, the method comprises a step 22 in which the profile maker server delivers the batch of SIM card profile to the server SM-DP.

Next, the method comprises a step 23 in which the server SM-DP generates a batch BTCH2 of SIM card profiles, as discussed previously and delivers the batch BTCH2 of SIM card profiles to the server of the device manufacturer.

Then, the method comprises a step 24 in which the server of the device manufacturer assembles the static parts and the dynamic parts of the batch received from the profile maker PM to form different SIM card profile packages intended for the different embedded universal integrated circuit card that are embedded into the devices produced by the device manufacturer.

Next, the method comprises a step 25 in which each SIM card profile package formed by the server of the device manufacturer are downloaded onto its associated embedded universal integrated circuit card that is embedded in a device produced by the device manufacturer.

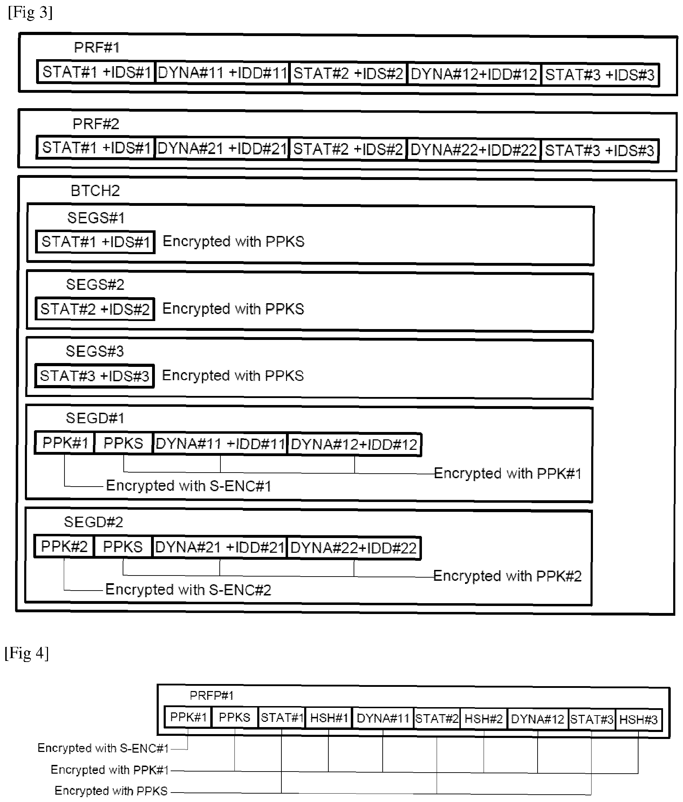

Figure 3 illustrates an example of two SIM card profiles PRF#1 and PRF#2 produced by the profile maker. Both of the first SIM card profile PRF#1 and the second SIM card profile PRF#2 include three static parts STAT#1, STAT#2, STAT#3. Each static part STAT#1, STAT#2, STAT#3 with an associated identifier IDS#1, IDS#2 and IDS#3 is encrypted using the cryptographic key PPKS by the server PM of the profile maker.

The first SIM card profile PRF#1 also includes two dynamic parts DYNA#11 et DYNA#12. The second SIM card profile PRF#2 also includes two dynamic parts DYNA#21 et DYNA#22. For each SIM card profile PRF#1 and PRF#2, the server SM-DP encrypts the dynamic parts DYNA#11, DYNA#12, respectively DYNA#21, DYNA#22 with their identifiers IDD#11, IDD#12, respectively IDD#21, IDD#22, and the cryptographic key PPKS. This encryption is performed by using a cryptographic key PPK#1 for the first SIM card profile PRF#1 and by using a cryptographic key PPK#2 for the second SIM card profile PRF#2. These encryptions allow obtaining dynamic segment SEGD#1 and SEGD#2 associated with the SIM car profiles PRF#1 and PRF#2 respectively.

Figure 3 also illustrates a batch BTCH2 produced by the server SM-DP from the two SIM card profile PRF#1 and PRF#2. The batch BTCH2 includes only one occurrence of the encrypted static segments SEGS#1, SEGS#2, SEGS#3 of the two SIM card profiles PRF#1 and PRF#2. The batch also includes the dynamic segments SEGD#1 and SEGD#2. The batch BTCH2 also includes for each dynamic segment SEGD#1 and SEGD#2 the cryptographic key PPK#1 or PPK#2 respectively (or values that can be used by the embedded universal integrated circuit cards to obtain the cryptographic key PPK#1 and PPK#2). The cryptographic keys PPK#1 and PPK#2 are encrypted with the session keys S-ENC#1 and S-ENC#2.

Figure 4 illustrates an example of a SIM card profile package PRFP#1 that can be produced by the server of the device manufacturer. This package is associated with the SIM card profile PRF#1 for example. The SIM card profile package includes the cryptographic key PPK#1 associated with the SIM card profile PRF#1 (or preferably a value that can be used by the embedded universal integrated circuit card to obtain the cryptographic key PPK#1, this value being communicated in the batch delivered by the server SM-DP), the cryptographic key PPKS, the static parts STAT#1, STAT#2, STAT#3 and eventually hash values HSH#1, HSH#2, HSH#3 for the static parts STAT#1, STAT#2, STAT#3 respectively. The SIM card profile package also includes the dynamic parts DYNA#11 and DYNA#12.

The static parts STAT#1, STAT#2, STAT#3 are encrypted by the server SM-DP using the cryptographic key PPKS. The cryptographic key PPK#1 is encrypted with the session key S-ENC#1. The cryptographic key PPKS, the eventual hash values HSH#1, HSH#2, HSH#3 and the dynamic parts DYNA#11 and DYNA#12 are encrypted by the server SM-DP using the cryptographic key PPK#1 in the package.

Figure 5 illustrates a first alternative of a SIM card profile package PRFP that can be produced by the server of the device manufacturer. In this alternative package, all the static parts of the SIM card package are arranged in only one part STATP of the package, and the dynamic parts are arranged in another part DYNAP of the package. This part STATP of the package is encrypted using the cryptographic key PPKS. The package includes a hash value HSHSP of the part STATP of the package. The dynamic part, the cryptographic key PPKS and the hash value is encrypted with the cryptographic key PPK. The cryptographic key PPK is encrypted with the session key S-ENC.

Figure 6 illustrates a second alternative of a SIM card profile package. The SIM card profile comprises a cryptographic key PPK, a cryptographic key PPKS, different static segments SEGST#1, SEGST#2, SEGST#3, identifiers IDSG#1, IDSG#2 and IDSG#3 for each static segments SEGST#1, SEGST#2, SEGST#3, and dynamic parts DYNA#1 and DYNA#2 of the SIM card profile. Each static segment includes a static part of the SIM card profile and an identifier of this static part.

A method of updating such SIM card profile package can be implemented to modify the static segment SEGST#1, SEGST#2, SEGST#3 by new static parts NSEGT#1, NSEGT#2, NSEGT#3. In this method, only the new segments NSEGT#1, NSEGT#2, NSEGT#3 are provided to the embedded universal integrated circuit card instead of a full new SIM car profile package. This allows reducing the data to be sent to the embedded universal integrated circuit card for updating a SIM card profile package.

## Claims

1. System comprising:
- embedded universal integrated circuit cards (eUICC1, eUICC2),
- at least one server (PM, SM-DP) configured to produce:
• SIM card profiles (PRF#1, PRF#2) according to a given configuration, each SIM card profile (PRF#1, PRF#2) comprising at least one static part that is common to said SIM card profiles and at least one dynamic part that is different between the SIM card profiles (PRF#1, PRF#2), and
• a batch (BTCH2) of said SIM card profiles (PRF#1, PRF#2), the batch including said at least one dynamic part of each SIM card profile and only one occurrence of said at least one common static part, said at least one static part being encrypted by using a common cryptographic key (PPKS), and said at least one dynamic part of each SIM card profile being encrypted by using a cryptographic key (PPK#1, PPK#2) associated with this SIM card profile,
- another server (DM) configured to:
• receive said batch (BTCH2) and produce a SIM card profile package (PRFP#1, PRFP#2) for each SIM card profile (PRF#1, PRF#2) of said batch (BTCH2), each SIM card profile package (PRFP#1, PRFP#2) including:
∘ said at least one static part of this SIM card profile encrypted by using the common cryptographic key (PPKS),
∘ said common cryptographic key (PPKS) and said at least one dynamic part of this SIM card profile, this common cryptographic key (PPKS) and this at least one dynamic part being encrypted by using its associated cryptographic key (PPK#1, PPK#2),
• download the SIM card profile packages (PRFP#1, PRFP#2) onto the embedded universal integrated circuit cards (eUICC1, eUICC2), each embedded universal integrated circuit card being configured to decrypt said at least one static part by using the common cryptographic key and to decrypt said at least one dynamic part by using its associated cryptographic key to obtain the SIM card profile (PRF#1, PRF#2).

2. System according to claim 1, in which said batch includes for each SIM card profile (PRF#1, PRF#2):
- said common cryptographic key (PPKS) encrypted with said associated key (PPK#1, PPK#2) associated with this SIM card profile (PRF#1, PRF#2), and
- said associated cryptographic key (PPK#1, PPK#2) associated with this SIM card profile,
and in which each SIM card profile package (PRFP#1, PRFP#2) also includes said associated cryptographic key (PPK#1, PPK#2) associated with the SIM card profile (PRF#1, PRF#2) associated with this SIM card profile package (PRFP#1, PRFP#2).

3. System according to claim 2, in which each associated cryptographic key (PPK#1, PPK#2) associated with a SIM card profile (PRF#1, PRF#2) is encrypted with a cryptographic key (S-ENC#1, S-ENC#2) known by said at least one server and by the embedded universal integrated circuit card configured to download the SIM card profile package (PRFP#1, PRFP#2) associated with this SIM card profile (PRF#1, PRF#2).

4. System according to claim 3, in which said cryptographic key (S-ENC#1, S-ENC#2) known by said at least one server and by the embedded universal integrated circuit card (eUICC1, eUICC2) is computed by using a Diffie-Hellman algorithm.

5. System according to one of claims 1 to 4, in which the common cryptographic key is a random value.

6. System according to one of claims 1 to 5, in which said associated cryptographic key is a random value.

7. System according to one of claims 1 to 6, in which said batch also comprises an identifier associated with said at least one static part and an identifier associated with said at least one dynamic part for each SIM card profile, said another server being configured to assemble said at least one static part and said at least one dynamic part of a SIM card profile based on their identifiers to form said SIM card profile package.

8. System according to one of claims 1 to 7, in which each SIM card profile comprises a plurality of static parts and a plurality of dynamic parts.

9. System according to claim 8, in which said at least one server (PM, SM-DP) is configured to group all the static parts of a SIM card profile in one part of the SIM card profile package.

10. System according to one of claims 1 to 9, in which said batch also comprises at least one integrity check value.

11. System according to claim 10, in which said at least one integrity check value is a hash value associated with said at least one static part.

12. Method of downloading SIM card profiles onto different embedded universal integrated circuit cards (eUICC1,eUICC2), the method comprising:
- producing by at least one server (PM, SM-DP) SIM card profiles (PRF#1, PRF#2) according to a given configuration, each SIM card profile comprising at least one static part that is common to all SIM card profiles (PRF#1, PRF#2) and at least one dynamic part that is different between the SIM card profiles (PRF#1, PRF#2), and
- producing by said at least one server (PM, SM-DP) a batch (BTCH2) of said SIM card profiles (PRF#1, PRF#2), the batch including said at least one dynamic part of each SIM card profile and only one occurrence of said at least one common static part, said at least one static part being encrypted by using a common cryptographic key (PPKS), and said at least one dynamic part of each SIM card profile being encrypted by using a cryptographic key (PPK#1, PPK#2) associated with this SIM card profile (PRF#1, PRF#2),
- receiving by another server (SM-DP) said batch (BTCH2),
- producing by said another server a SIM card profile package (PRFP#1, PRFP#2) for each SIM card profile (PRF#1, PRF#2) of said batch (BTCH2), each SIM card profile package (PRFP#1, PRFP#2) including:
∘ said at least one static part of this SIM card profile encrypted by using the common cryptographic key (PPKS),
∘ said common cryptographic key (PPKS) and said at least one dynamic part of this SIM card profile, this common cryptographic key and this at least one dynamic part being encrypted by using its associated cryptographic key (PPK#1, PPK#2),
- downloading from said another server (DM) the SIM card profile packages (PRFP#1, PRFP#2) onto the embedded universal integrated circuit cards (eUICC1, eUICC2),
- decrypting by each embedded universal integrated circuit card (eUICC1, eUICC2) said at least one static part by using the common cryptographic key and said at least one dynamic part by using its associated cryptographic key to obtain the SIM card profile (PRF#1, PRF#2).

13. Method according to claim 12, in which said batch includes for each SIM card profile (PRF#1, PRF#2):
- said common cryptographic key (PPKS) encrypted with said associated key (PPK#1, PPK#2) associated with this SIM card profile (PRF#1, PRF#2), and
- said associated cryptographic key (PPK#1, PPK#2) associated with this SIM card profile,
and in which each SIM card profile package (PRFP#1, PRFP#2) also includes said associated cryptographic key (PPK#1, PPK#2) associated with the SIM card profile (PRF#1, PRF#2) associated with this SIM card profile package (PRFP#1, PRFP#2).

14. Method according to claim 13, comprising encrypting each associated cryptographic key (PPK#1, PPK#2) associated with a SIM card profile (PRF#1, PRF#2) with a cryptographic key (S-ENC#1, S-ENC#2) known by said at least one server and by the embedded universal integrated circuit card (eUICC1, eUICC2) configured to download the SIM card profile package (PRFP#1, PRFP#2) associated with this SIM card profile.

15. System according to claim 14, in which said cryptographic key (S-ENC#1, S-ENC#2) known by said at least one server and by the embedded universal integrated circuit card (eUICC1, eUICC2) is computed by using a Diffie-Hellman algorithm.

16. Method according to one of claims 12 to 15, in which the common cryptographic key is a random value.

17. Method according to one of claims 12 to 16, in which said associated cryptographic key is a random value.

18. Method according to one of claims 12 to 17, in which said batch also comprises an identifier associated with said at least one static part and an identifier associated with said at least one dynamic part for each SIM card profile, and in which said another server (DM) assembles said at least one static part and said at least one dynamic part of a SIM card profile based on their identifiers to form said SIM card profile package.

19. Method according to one of claims 12 to 18, in which each SIM card profile comprises a plurality of static parts and a plurality of dynamic parts.

20. Method according to claim 19, in which producing said batch includes grouping all the static parts of a SIM card profile in one part of the SIM card profile package.

21. Method according to one of claims 12 to 20, in which said batch also comprises at least one integrity check value.

22. Method according to claim 21, in which said at least one integrity check value is a hash value associated with said at least one static part.
